# FASCICULE DE BREVET EUROPEEN

(11) **EP 1 808 330 B1**
(45) Date de publication et mention de la délivrance du brevet: **21.11.2012**
(21) Numéro de dépôt: 07290033.5
(22) Date de dépôt: 10.01.2007
(51) Int. Cl.: B60N 2/20, B60N 2/06, B60N 2/30

(54) **Siège pour véhicule automobile mobile selon un premier axe x et un second axe y et véhicule automobile comprenant un tel siège**
Sitz für Kraftfahrzeug, der entlang einer ersten Achse x und einer zweiten Achse y beweglich ist, und Kraftfahrzeug, das einen solchen Sitz umfasst
Seat for an automobile along a first axis x and a second axis y and automobile comprising such a seat

(30) Priorité: 12.01.2006 FR 0650114
(43) Date de publication de la demande: 18.07.2007
(73) Titulaire: HEULIEZ SAS, 79140 Cerizay (FR)
(72) Inventeur: Queveau, Paul, 79140 Montravers (FR); Leclerre, Frédéric, 91300 Massy (FR)
(74) Mandataire: Novagraaf Technologies

(56) Documents cités:
- EP-A- 1 228 922
- BE-A1- 899 282
- GB-A- 1 031 434
- JP-A- 10 203 210

## Description

L'invention concerne un siège pour véhicule automobile et un véhicule automobile équipé d'au moins un siège selon l'invention.

Dans l'art antérieur, il est connu des sièges de véhicule automobile montés mobiles à la fois transversalement et longitudinalement au véhicule.

Il est notamment décrit dans le document EP 0 588 693 une rangée de sièges arrière comprenant deux sièges latéraux montés à coulissement longitudinal et transversal au moyen d'un premier jeu de glissières longitudinales monté sur un second jeu de glissières transversales. Ainsi, la disposition des sièges arrière est modulable et les sièges latéraux peuvent être déplacés latéralement et reculées afin d'augmenter l'espace situé devant le passager et accroître le confort du passager.

Cependant, le déplacement des sièges latéraux de l'art antérieur s'effectue nécessairement en deux étapes. En effet, l'utilisateur doit d'abord déplacer les sièges latéralement afin de se rapprocher de la ligne médiane longitudinale du véhicule puis longitudinalement afin d'augmenter l'espace située devant le passager.

De plus, le mouvement des sièges latéraux n'est pas guidé selon une trajectoire préférée permettant d'éviter des obstacles situés dans l'habitacle du véhicule : le passage des roues ou un siège central lorsque le siège est un siège latéral de rangée de siège arrière. Par conséquent, l'amplitude du mouvement du siège est limité afin d'éviter des éventuelles interférences avec de tels obstacles. Ainsi, le document EP 0 588 693, par exemple, ne propose pas de déplacer les sièges latéraux vers une zone située entre les passages de roues.

Par ailleurs, les moyens de coulissement longitudinaux et les moyens de coulissement latéraux sont totalement indépendants. Ainsi, chaque moyen de coulissement possède ses propres moyens de verrouillage ce qui augmente la complexité et le coût du dispositif de déplacement du siège.

L'art antérieur le plus proche est montré dans le document JP 10203210.

L'invention vise à remédier à ces problèmes en proposant un siège pour véhicule automobile qui soit mobile à la fois latéralement et longitudinalement au véhicule au moyen d'un dispositif de déplacement qui soit simple d'utilisation, peu onéreux et permette d'éviter des obstacles de l'habitacle du véhicule.

A cet effet, et selon un premier aspect, l'invention propose un siège pour véhicule automobile possédant une assise montée sur un dispositif de déplacement; ledit dispositif de déplacement comprenant au moins un moyen de coulissement de ladite assise selon un premier axe et au moins un moyen de coulissement de ladite assise selon un deuxième axe concourant audit premier axe. Le dispositif de déplacement comprend en outre un mécanisme de guidage définissant une trajectoire de déplacement de l'assise et permettant de guider le mouvement de l'assise en translation simultanément selon le premier et deuxième axe.

Le mécanisme de guidage comporte une glissière et un doigt mobile dans ladite glissière, ledit doigt étant monté solidaire de l'assise, et ladite glissière étant monté solidaire du plancher du véhicule ladite glissière étant monté solidaire de l'assise solidaire de l'assise et ledit doigt étant monté solidaire du plancher du véhicule.

Ainsi, le dispositif de déplacement permet de guider l'assise afin d'éviter des obstacles de l'habitacle du véhicule.

En outre, le dispositif de déplacement est simple d'utilisation car le déplacement de l'assise s'effectue en une seule étape, le déplacement de l'assise selon le premier axe et le second axe s'effectuant simultanément.

Enfin, le mécanisme de guidage permet de rendre dépendant le mouvement du siège selon le premier et le second axe. Ainsi, le siège peut comporter un seul moyen de verrouillage permettant de bloquer un moyen de coulissement afin d'immobiliser l'assise.

Ainsi, le mécanisme de guidage est relativement simple et la conception d'un mécanisme de guidage agencé pour éviter les obstacles de l'habitacle du véhicule est aisé.

Avantageusement, la glissière possède sensiblement une forme de crosse dont une première partie s'étend sensiblement selon le premier axe x.

Ainsi, le siège est particulièrement adapté à une utilisation en tant que siège latéral d'une rangée de siège arrière selon l'invention, la courbure de la crosse permettant d'éviter le passage des roues.

Le dispositif de déplacement comprend au moins un coulisseau monté coulissant sur un patin selon le second axe y, ledit patin étant monté coulissant selon le premier axe x sur une glissière destinée à être fixée au plancher du véhicule. Avantageusement, le dispositif de déplacement de l'assise comprend deux coulisseaux parallèles montés coulissants sur deux patins parallèles, lesdits patins étant chacun montés coulissants dans une glissière s'étendant selon le premier axe x.

Ainsi, le dispositif de déplacement est facilement réalisable.

Avantageusement, le siège comporte une traverse solidaire des coulisseaux parallèles et supportant ledit doigt ou ladite glissière .

Dans un mode de réalisation préféré, le premier axe x et le deuxième axe y sont perpendiculaires.

Avantageusement, le siège comporte un dispositif d'articulation de l'assise monté sur le dispositif de déplacement et permettant le mouvement de l'assise entre une position d'utilisation et une position abaissée. Le dispositif d'articulation de l'assise est composé de quatre biellettes parallèles possédant une première extrémité montée en rotation sur l'assise autour d'un troisième axe A et une seconde extrémité montée en rotation sur le dispositif de déplacement selon un quatrième axe B parallèle audit troisième axe A, lesdites biellettes formant un parallélépipède déformable.

En outre, le dossier est monté articulé sur l'assise entre au moins une position d'utilisation et une position rabattue contre ladite assise.

L'invention concerne également un véhicule automobile comportant au moins un siège selon l'invention, le premier axe x (respectivement le deuxième axe y) étant un axe longitudinal au véhicule et ledit deuxième axe y (respectivement le premier axe x) étant un axe transversal au véhicule. Le véhicule automobile comprend une rangée de siège arrière composée de deux sièges latéraux disposés de part et d'autre d'un siège central.

Ainsi, les deux sièges latéraux sont mobiles entre une position avancée latérale dans laquelle les sièges latéraux sont disposés de part et d'autre du siège central et uns position reculée centrale dans laquelle lesdits sièges latéraux se situent dans une zone située entre le passage des roues. Lorsque les sièges latéraux sont dans leur position reculée centrale, l'espace situé devant les sièges latéraux est augmenté afin d'accroître le confort des passagers.

Avantageusement, le siège central possède une assise et un dossier monté articulé par rapport à ladite assise entre une position d'utilisation et une position rabattu dans laquelle le dossier est disposé contre l'assise, l'assise dudit siège central étant en outre monté mobile par rapport au plancher entre une position d'utilisation et une position abaissée dans laquelle le siège central est décalé verticalement vers la bas par rapport au plan de l'assise des sièges latéraux lorsque lesdites assises sont dans leur position d'utilisation.

Ainsi, le siège central est particulièrement adapté pour permettre le mouvement des sièges latéraux entre leur position avancée latérale et leur position reculée centrale.

Avantageusement, les sièges latéraux sont mobiles entre une position avancée latérale dans laquelle les sièges latéraux sont disposés de part et d'autre du siège central et une position reculée centrale dans laquelle, lorsque le dossier du siège central est dans sa position rabattue et l'assise du siège central dans sa position abaissée, au moins une partie de l'assise des sièges latéraux s'étend au-dessus de l'assise du siège central.

D'autres objets et avantages de l'invention apparaîtront au cours de la description qui suit, faite en référence aux dessins annexés, dans lesquels :

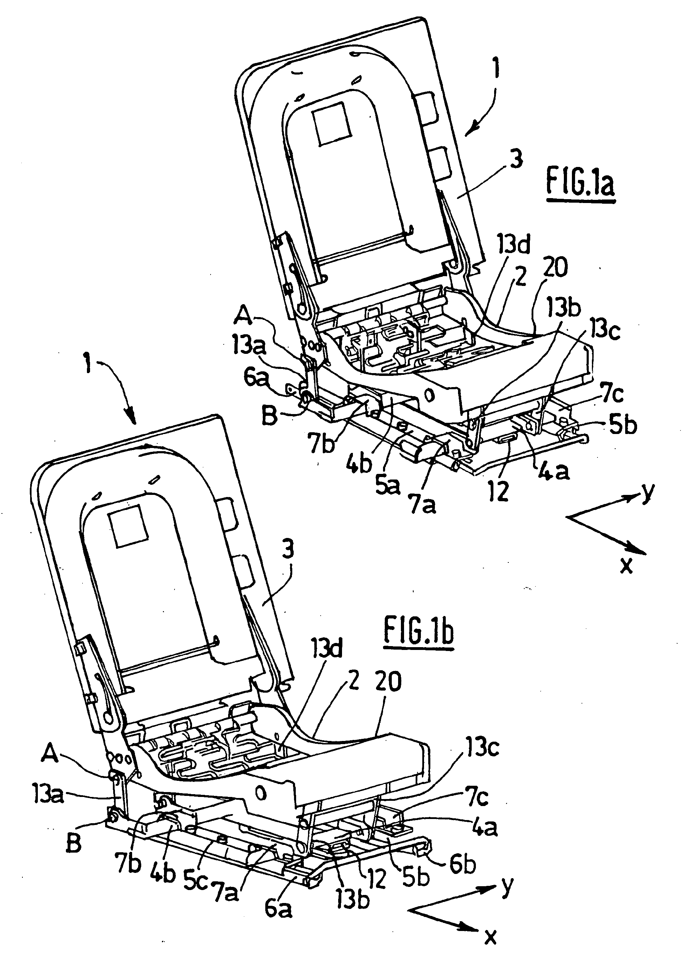

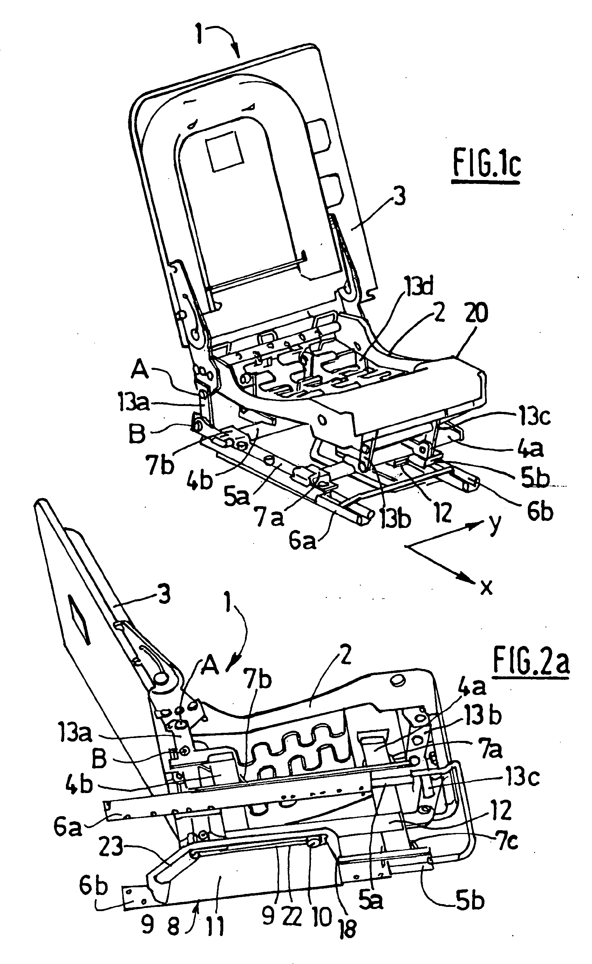

- les figures 1a, 1b et 1c sont des vues avant en perspective d'un siège latéral droit d'une rangée de siège arrière pour véhicule automobile selon l'invention respectivement en position avancée, intermédiaire et reculée ;

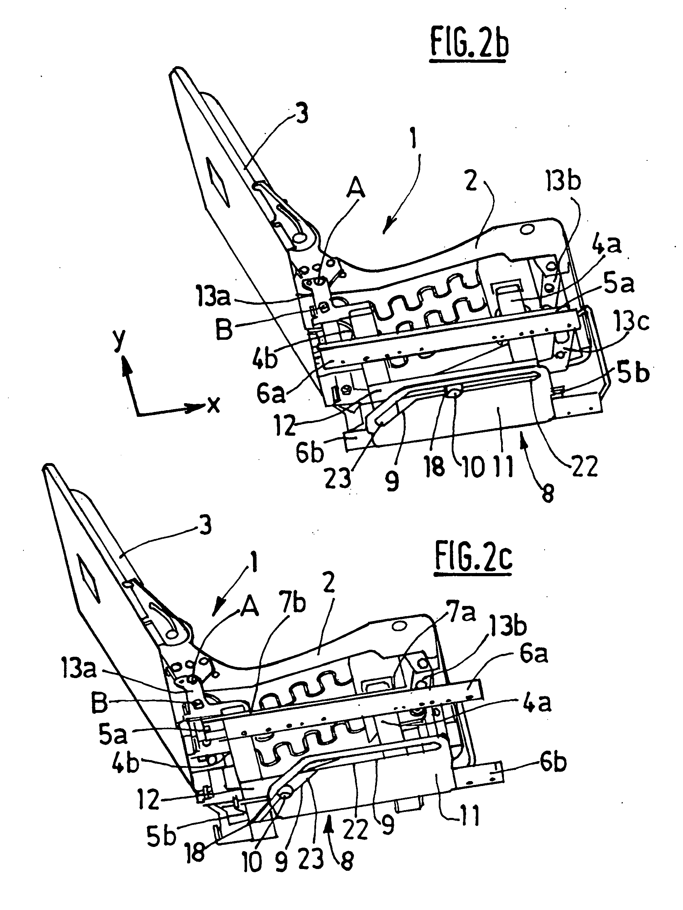

- les figures 2a, 2b et 2c sont des vues en perspective de dessous du siège latéral droit respectivement en position avancée, intermédiaire et reculée ;
- la figure 3 est une vue en perspective du siège selon l'invention en position escamotée ;
- la figure 4 est une vue détaillée du mécanisme de guidage du mouvement du siège ;
- la figure 5 est une vue avant en perspective d'une rangée de sièges arrière selon l'invention, les sièges latéraux étant en position avancée latérale et le siège central étant en position d'utilisation ;
- la figure 6 est une vue avant en perspective d'une rangée de sièges arrière selon l'invention, les sièges latéraux étant en position avancée latérale et le siège central étant en position escamotée ; et
- la figure 7 est une vue avant en perspective d'une rangée de sièges arrière selon l'invention, les sièges latéraux étant dans leur position reculée centrale et le siège central étant dans sa position escamotée.

Dans la suite de la description, les termes « avant, arrière, vertical, horizontal, longitudinal, transversal » sont définis par rapport à un véhicule en cours d'utilisation.

Le siège 1 selon l'invention possède une assise 2 et un dossier 3 monté articulé sur ladite assise 2. Avantageusement, le dossier 3 est monté articulé sur l'assise 2 entre au moins une position d'utilisation et une position rabattue contre l'assise 3.

L'assise 2 est montée sur un dispositif de déplacement permettant un mouvement selon un premier axe x sensiblement horizontal et un deuxième axe y sensiblement horizontal. Dans un mode de réalisation préféré, les deux axes x et y sont orthogonaux.

À cet effet, le dispositif de déplacement comprend deux coulisseaux 4a, 4b parallèles qui sont montés coulissants selon un deuxième axe y sur deux patins 5a, 5b parallèles. Dans le mode de réalisation représenté, les coulisseaux 4a, 4b sont des barres horizontales qui coulissent dans des arceaux 7a, 7b, 7c, 7d solidaires des patins 5a, 5b.

En outre, chaque patin 5a, 5b est monté coulissant selon le premier axe x sur une glissière 6a, 6b. Ainsi, l'assise 2 est mobile selon le premier axe x.

Avantageusement, lorsque le siège 1 est installé dans un véhicule automobile, les glissières 6a, 6b sont fixées au plancher longitudinalement au véhicule. Ainsi, le premier axe x est un axe longitudinal au véhicule et le deuxième axe y est un axe transversal au véhicule.

Avantageusement, les glissières 6a, 6b sont équipés d'un système de verrouillage/déverrouillage permettant d'immobiliser les patins 5a, 5b sur les glissières 6a, 6b.

Le dispositif de déplacement comprend en outre un mécanisme de guidage 8 permettant de guider la translation de l'assise 2 simultanément selon le premier axe x et le deuxième axe y.

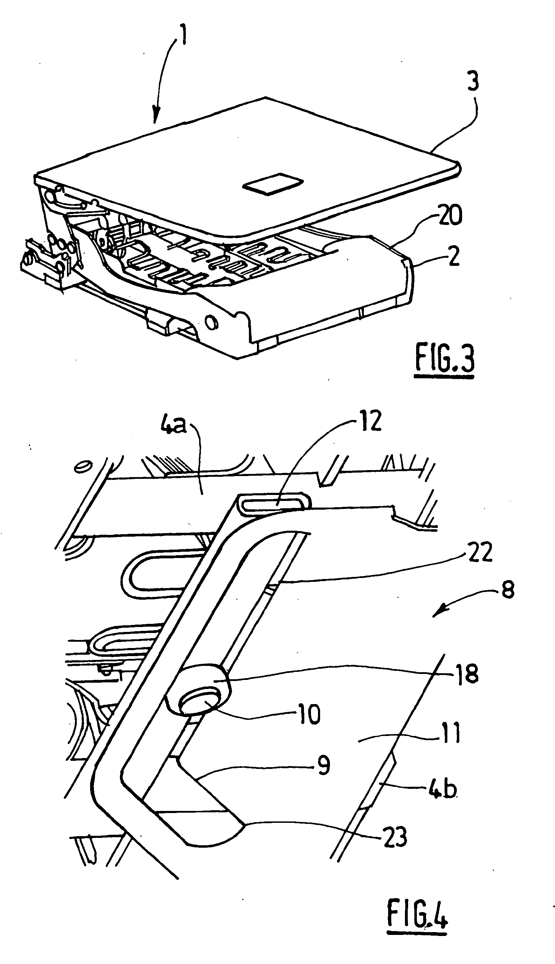

Le mécanisme de guidage 8, représenté de façon détaillée sur la figure 4, comprend une glissière 9 et un doigt 10 mobile dans ladite glissière 9.

Dans le mode de réalisation représenté, le doigt 10 est monté solidaire de l'assise 2 et la glissière 9 est montée solidaire du plancher du véhicule. Cependant, on remarquera que le doigt 10 peut également être monté solidaire du plancher du véhicule et la glissière 9 solidaire de l'assise du véhicule. On notera également que dans des modes de réalisation non représentés, la glissière 9 ou le doigt 10 peut être formé(e) directement dans le plancher du véhicule.

Dans le mode de réalisation représenté, la glissière 9 est formée dans une pièce profilée 11 destiné à être fixée sur le plancher du véhicule. Avantageusement, un galet 18 est monté mobile en rotation autour du doigt 10 et coopère avec les parois de la glissière 9.

Dans le mode de réalisation représenté, une traverse de renfort 12 est disposé entre les deux coulisseaux 4a, 4b parallèles et le doigt 10 est monté solidaire de ladite traverse de renfort 12.

Afin de déplacer l'assise 2, l'utilisateur pousse ou tire la poignée 24 solidaire des patins 5a et 5b. Les patins 5a, 5b coulissent alors sur les glissières 6a, 6b selon le premier axe x et le doigt 10 se déplace alors dans la glissière 9. En fonction de la forme de la glissière, le déplacement du doigt 10 dans la glissière 9 entraîne le déplacement des coulisseaux 4a, 4b selon le deuxième axe y. Ainsi, la translation de l'assise 2 s'effectue simultanément selon le premier axe x et selon le deuxième axe y.

Le mécanisme de guidage 8 permet de définir une trajectoire de déplacement de l'assise 2 permettant d'éviter les obstacles de l'habitacle du véhicule. A cet effet, la forme de la glissière 9 est déterminée en fonction des obstacles à éviter.

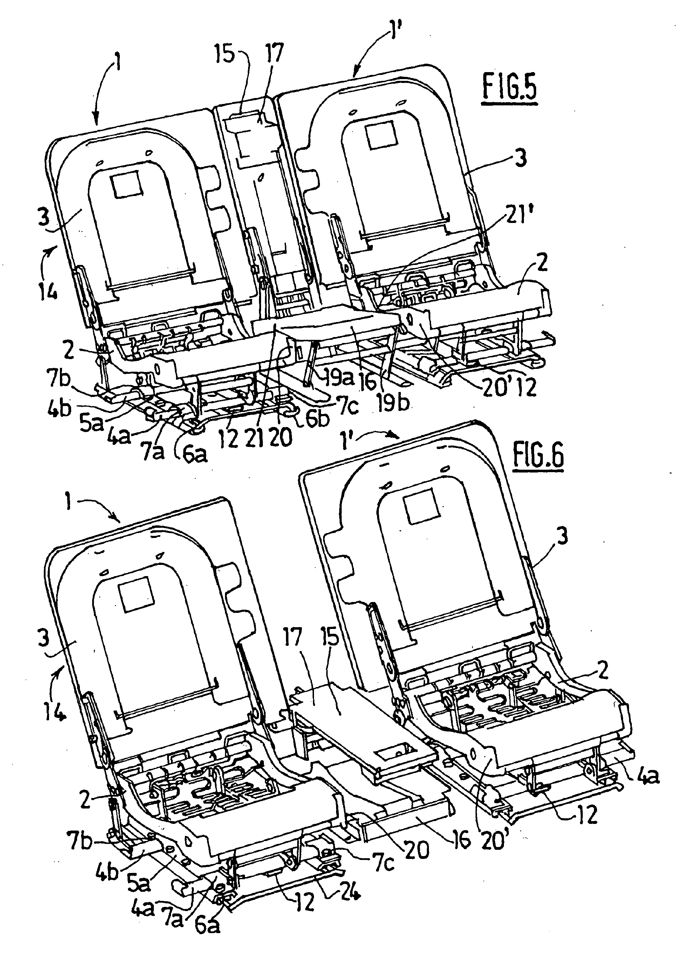

Lorsque le siège 1' est destiné à former un siège latéral de rangée 14 de siège arrière, tel que décrit en référence aux figures 5 à 7, la forme de la glissière 9 est agencée pour éviter le passage des roues ou le siège central. A cet effet, la glissière 9 possède sensiblement une forme de crosse.

Dans le mode de réalisation préféré, la première partie 22 de la glissière 9 s'étend sensiblement selon le premier axe x, axe longitudinale du véhicule. Ainsi, lors du déplacement du doigt 10 dans cette première partie, le siège 1 coulisse longitudinalement au véhicule. La seconde partie 23 présente une courbure permettant d'éviter le passage des roues et de rapprocher le siège 1 de l'axe longitudinal médian du véhicule.

Avantageusement, le siège 1 comporte un dispositif d'articulation de l'assise 2. Ainsi, l'assise 2 est mobile entre une position d'utilisation et une position abaissée, sensiblement contre le plancher du véhicule.

Dans le mode de réalisation représenté, le dispositif d'articulation est composé de quatre biellettes 13a, 13b, 13c, 13d parallèles montées d'une part en rotation sur l'assise 2 autour d'un troisième axe (A) et d'autre part en rotation sur le dispositif de déplacement de l'assise selon un quatrième axe (B). Dans le mode de réalisation particulier les biellettes 13a, 13b, 13c, 13d sont montées en rotation sur les coulisseaux 4a, 4b. Bien évidemment, le dispositif d'articulation de l'assise 2 est composé d'un mécanisme de verrouillage, non représenté, permettant de l'immobiliser dans sa position d'utilisation et dans sa position abaissée.

La figure 3 représente le siège 1 en position escamotée : le dossier 3 est en position rabattue contre l'assise 2 et l'assise 2 est en position abaissée.

En référence aux figures 5, 6 et 7, on décrit maintenant un véhicule automobile comportant une rangée 14 de sièges arrière 1, 1', 15 composée d'au moins un siège 1,1' selon l'invention. Dans le mode de réalisation représenté, la rangée 14 de sièges arrière est composée de deux sièges latéraux 1, 1' selon l'invention, disposés de part et d'autre d'un siège central 15.

Le siège central 15 est composé d'une assise 16 et d'un dossier 17. Le dossier 17 est monté en rotation par rapport à l'assise 16 entre une position d'utilisation et une position rabattue dans laquelle le dossier 17 est disposé contre l'assise 16. En outre, l'assise 16 est montée mobile par rapport au plancher entre une position d'utilisation et une position abaissée dans laquelle l'assise 16 du siège central 15 est décalée verticalement vers le bas par rapport au plan d'assise 2 des sièges latéraux 1, 1' lorsque lesdites assises 2 des sièges latéraux 1, 1' sont dans leur position d'utilisation. Le siège central 15 est dans sa position escamotée lorsque le dossier 17 est dans sa position rabattue contre l'assise 16 et l'assise 16 est dans sa position abaissée.

Un mécanisme d'articulation permet le déplacement de l'assise 16 du siège central 15 par rapport au plancher. Selon le mode de réalisation représenté, le mécanisme d'articulation est similaire à celui des sièges latéraux. Le mécanisme d'articulation est composé de quatre biellettes 19a, 19 b parallèles formant un parallélépipède déformable. La première extrémité de ces biellettes 19a, 19b est montée en rotation sur l'assise 16 du siège central 15 autour d'un axe sensiblement perpendiculaire à l'axe longitudinal du véhicule et la seconde extrémité est montée en rotation par rapport au plancher autour d'un axe sensiblement perpendiculaire à l'axe longitudinal du véhicule. Bien évidemment, le siège central 15 possède des moyens de verrouillage permettant de l'immobiliser dans sa position d'utilisation ou dans sa positon escamotée.

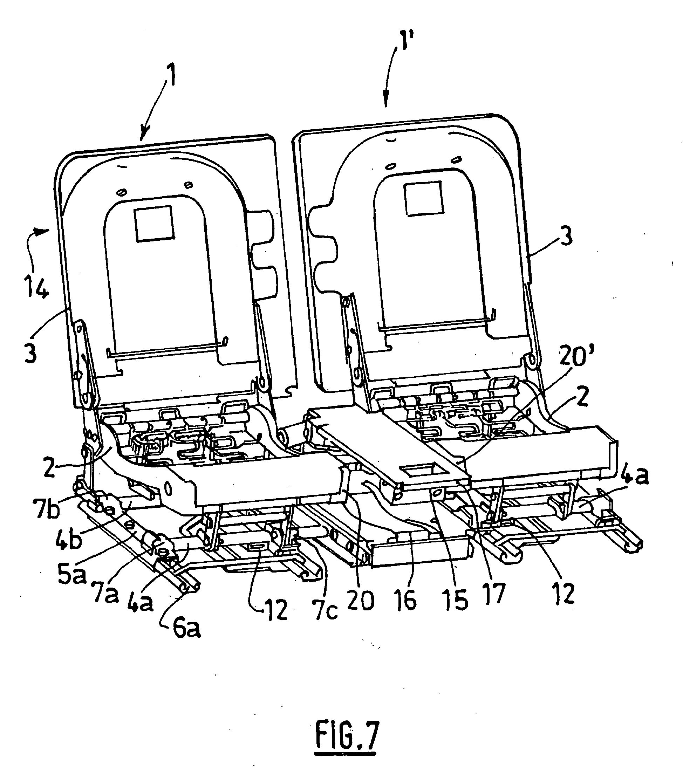

Selon le mode de réalisation représenté, les sièges latéraux 1, 1' sont mobiles entre une position avancée latérale (figures 5 et 6) et une position reculée centrale (figure 7).

Lors du mouvement des sièges latéraux 1, 1' de leur position avancée latérale à leur position reculée centrale, les sièges 1, 1' se rapprochent de l'axe longitudinal médian du véhicule de façon à éviter le passage des roues et reculent de façon à augmenter l'espace situé devant les passagers.

La figure 5 représente les sièges latéraux 1, 1' dans leur position d'utilisation avancée latérale et le siège central 15 dans sa position d'utilisation. Dans cette configuration, les sièges latéraux 1, 1' sont disposés de part et d'autre du siège central 15. Avantageusement, le bord latéral central 20, 20' de l'assise 2 des sièges latéraux 1, 1' est disposé contre les bords latéraux 21, 21' de l'assise 16 du siège central 15. L'assise 2 des sièges latéraux et l'assise 16 du siège central 15 sont sensiblement disposées dans un même plan horizontal. Dans cette configuration, la rangée 14 de sièges arrière 1, 1', 15 permet d'accueillir trois passagers.

La figure 6 représente, les sièges latéraux 1, 1' dans leur position d'utilisation avancée latérale et le siège central 15 dans sa position escamotée. Lorsque le dossier 17 du siège central 15 est dans sa position rabattue, le dossier 17 du siège central 15 peut servir d'accoudoir ou de tablettes pour les passagers des sièges latéraux 1, 1'. Cette configuration permet d'augmenter le confort des passagers qui disposent alors d'un accoudoir. Cependant l'espace situé devant les passagers n'est pas augmenté afin de ne pas diminuer l'espace de rangement des bagages.

La figure 7 représente les sièges latéraux 1, 1' dans leur position d'utilisation reculée centrale et le siège central 15 est dans sa position escamotée. Avantageusement, au moins une partie de l'assise 2 des sièges latéraux 1, 1' s'étend au-dessus de l'assise 16 du siège central 15. Dans le mode de réalisation représenté sur les figures 5 à 7, la largeur du dossier 17 du siège central 15 est inférieure à la largeur de son assise. Ainsi, le bord latéral central 20, 20' de l'assise 2 des sièges latéraux 1', 1' est disposé au-dessus de l'assise 16 du siège central 15 et sensiblement contre le bord latéral adjacent du dossier 17 du siège central 15. Dans cette configuration, l'espace situé devant les sièges 1, 1' est augmenté de façon à accroître le confort des passagers. On remarquera cependant que dans cette configuration, la rangée 14 de sièges arrière est agencée pour accueillir uniquement deux passagers.

Dans une configuration non représentée, les sièges latéraux 1, 1' et le siège central 15 sont dans leur position escamotée. Dans cette configuration, le véhicule automobile est en configuration utilitaire et tout l'espace arrière de l'habitacle peut être utilisé pour le stockage des bagages.

Pour passer de la configuration de la figure 5 à la configuration de la figure 7, le dossier 17 du siège central 15 est préalablement déplacé vers sa position rabattue et son assise 16 est dans sa position escamotée. Ainsi, les sièges latéraux 1, 1' peuvent être déplacés vers leur position reculée latérale.

Inversement, pour passer de la configuration de la figure 7 à la configuration de la figure 5, les sièges latéraux 1, 1' sont préalablement déplacés vers leur position avancée latérale puis le dossier 17 et l'assise 16 du siège central 15 sont déplacés vers leur position d'utilisation.

## Revendications

1. Siège (1) pour véhicule automobile, le siège comprenant une assise (2) et un dispositif de déplacement sur lequel l'assise est montée; ledit dispositif de déplacement comprenant:
- un moyen de coulissement de ladite assise (2) selon un premier axe (x) et au moins un moyen de coulissement de ladite assise (2) selon un deuxième axe (y) concourant audit premier axe (x), et,
- un mécanisme de guidage (8) définissant une trajectoire de déplacement de l'assise et permettant de guider le mouvement de l'assise (2) en translation simultanément selon le premier (x) et deuxième axe (y),
**caractérisé en ce que** ledit mécanisme de guidage (8) comporte une glissière (9) et un doigt (10) mobile dans ladite glissière (9), ladite glissière (9) étant montable solidaire du plancher du véhicule ou ladite glissière étant montable solidaire de l'assise (2), et ledit doigt étant montable solidaire de l'assise (2) ou ledit doigt étant montable solidaire du plancher du véhicule.

2. Siège (1) pour véhicule automobile selon la revendication 2, **caractérisé en ce que** la glissière (9) possède sensiblement une forme de crosse dont une première partie s'étend sensiblement selon le premier axe (x).

3. Siège (1) pour véhicule automobile selon la revendication 1 à 3, **caractérisé en ce que** le dispositif de déplacement comprend au moins un coulisseau (4a, 4b) monté coulissant sur un patin (5a, 5b) selon le second axe (y), ledit patin (5a, 5b) étant monté coulissant selon le premier axe (x) sur une glissière (6a, 6b) destinée à être fixée au plancher du véhicule.

4. Siège (1) pour véhicule automobile selon la revendication 4, **caractérisé en ce que** le dispositif de déplacement de l'assise (2) comprend deux coulisseaux (4a, 4b) parallèles montés coulissants sur deux patins (5a, 5b) parallèles, lesdits patins (5a, 5b) étant chacun montés coulissants dans une glissière (6a, 6b) s'étendant selon le premier axe (x).

5. Siège (1) pour véhicule automobile selon la revendication 5, **caractérisé en ce qu'**il comporte une traverse (12) solidaire des coulisseaux (4a, 4b) parallèles et supportant ledit doigt (10) ou ladite glissière (9).

6. Siège (1) pour véhicule automobile selon l'une des revendications 1 à 6, **caractérisé en ce que** le premier axe (x) et le deuxième axe (y) sont perpendiculaires.

7. Siège (1) pour véhicule automobile selon la revendication 1 à 7, **caractérisé en ce qu'**il comporte un dispositif d'articulation de l'assise (2), monté sur le dispositif de déplacement et permettant le mouvement de l'assise (2) entre une position d'utilisation et une position abaissée.

8. Siège (1) pour véhicule automobile selon la revendication 8, **caractérisé en ce que** le dispositif d'articulation de l'assise est composé de quatre biellettes (13a, 13b, 13c, 13d) parallèles possédant une première extrémité montée en rotation sur l'assise (2) autour d'un troisième axe (A) et une seconde extrémité montée en rotation sur le dispositif de déplacement selon un quatrième axe (B) parallèle audit troisième axe (A), lesdites biellettes (13a, 13b, 13c, 13d) formant un parallélépipède déformable.

9. Siège (1) pour véhicule automobile selon l'une des revendications 1 à 9, **caractérisé en ce qu'**il comprend un dossier (3) monté sur l'assise (2).

10. Siège (1) pour véhicule automobile selon la revendication 10, **caractérisé en ce que** le dossier (3) est monté articulé sur l'assise (2) entre au moins une position d'utilisation et une position rabattue contre ladite assise (2).

11. Véhicule automobile **caractérisé en ce qu'**il comporte au moins un siège (1) selon l'une quelconque des revendications 1 à 11, le premier axe (x) (respectivement le deuxième axe (y)) étant un axe longitudinal au véhicule et ledit deuxième axe (y) (respectivement le premier axe (x)) étant un axe transversal au véhicule.

12. Véhicule automobile selon la revendication 12, **caractérisé en ce qu'**il comprend une rangée (14) de siège arrière composée de deux sièges latéraux (1, 1') selon l'une des revendications 1 à 10, disposés de part et d'autre d'un siège central (15).

13. Véhicule automobile selon la revendication 13, **caractérisé en ce que** le siège central (15) possède une assise (16) et un dossier (17) monté articulé par rapport à ladite assise (16) entre une position d'utilisation et une position rabattu dans laquelle le dossier (17) est disposé contre l'assise (16), l'assise (16) dudit siège central (15) étant en outre monté mobile par rapport au plancher entre une position d'utilisation et une position abaissée dans laquelle le siège central (15) est décalé verticalement vers la bas par rapport au plan de l'assise (2) des sièges latéraux (1, 1') lorsque lesdites assises (2) sont dans leur position d'utilisation.

14. Véhicule automobile selon la revendication 14 , **caractérisé en ce que** les sièges latéraux (1, 1') sont mobiles entre une position avancée latérale dans laquelle les sièges latéraux (1, 1') sont disposés de part et d'autre du siège central (15) et une position reculée centrale dans laquelle, lorsque le dossier (17) du siège central (15) est dans sa position rabattue et l'assise (16) du siège central (15) dans sa position abaissée, au moins une partie de l'assise (2) des sièges latéraux (1, 1') s'étend au-dessus de l'assise (16) du siège central (15).

## Claims

1. Seat (1) for motor vehicle, the seat comprising a seating surface (2) and a displacement device whereon the seating surface is mounted; said displacement device comprising:
- a means for sliding said seating surface (2) according to a first axis (x) and at least one means for sliding said seating surface (2) according to a second axis (y) convergent with said first axis (x), and,
- a guiding mechanism (8) defining a trajectory of displacement of the seating surface and making it possible to guide the movement of the seating surface (2) in translation simultaneously according to the first (x) and second axis (y),
**characterised in that** said guiding mechanism (8) comprises a slideway (9) and a finger (10) mobile in said slideway (9), said slideway (9) able to be mounted integral with the floor of the vehicle or said slideway able to be mounted integral with the seating surface (2), and said finger able to be mounted integral with the seating surface (2) or said finger able to be mounted integral with the floor of the vehicle.

2. Seat (1) for motor vehicle according to claim 1, **characterised in that** the slideway (9) substantially has a shape of a cross of which a first portion extends substantially according to the first axis (x).

3. Seat (1) for motor vehicle according to claim 1 or 2, **characterised in that** the displacement device comprises at least one slide (4a, 4b) mounted sliding on a pad (5a, 5b) according to the second axis (y), said pad (5a, 5b) being mounted sliding according to the first axis (x) on a slideway (6a, 6b) intended to be fixed to the floor of the vehicle.

4. Seat (1) for motor vehicle according to claim 3, **characterised in that** the displacement device for the seating surface (2) comprises two parallel slides (4a, 4b) mounted sliding on two parallel pads (5a, 5b), said pads (5a, 5b) each mounted sliding in a slideway (6a, 6b) extending according to the first axis (x).

5. Seat (1) for motor vehicle according to claim 4, **characterised in that** it comprises a cross member (12) integral with parallel slides (4a, 4b) and supporting said finger (10) or said slideway (9).

6. Seat (1) for motor vehicle according to one of claims 1 to 5, **characterised in that** the first axis (x) and the second axis (y) are perpendicular.

7. Seat (1) for motor vehicle according to claim 1 to 6, **characterised in that** it comprises a device for articulating the seating surface (2), mounted on the displacement device and allowing for the movement of the seating surface (2) between a position of use and a lowered position.

8. Seat (1) for motor vehicle according to claim 7, **characterised in that** the device for articulating the seating surface is composed of four parallel connecting rods (13a, 13b, 13c, 13d) having a first end mounted in rotation on the seating surface (2) around a third axis (A) and a second end mounted in rotation on the displacement device according to a fourth axis (B) parallel to said third axis (A), said connecting rods (13a, 13b, 13c, 13d) forming a deformable parallelepiped.

9. Seat (1) for motor vehicle according to one of claims 1 to 8, **characterised in that** it comprises a seatback (3) mounted on the seating surface (2).

10. Seat (1) for motor vehicle according to claim 9, **characterised in that** the seatback (3) is mounted articulated on the seating surface (2) between at least one position of use and one position folded back against said seating surface (2).

11. Motor vehicle **characterised in that** it comprises at least one seat (1) according to any of claims 1 to 10, the first axis (x) (respectively the second axis (y)) being an axis longitudinal to the vehicle and said second axis (y) (respectively the first axis (x)) being an axis transversal to the vehicle.

12. Motor vehicle according to claim 11, **characterised in that** it comprises a row (14) of rear seats composed of two lateral seats (1, 1') according to one of claims 1 to 10, arranged on either side of a central seat (15).

13. Motor vehicle according to claim 12, **characterised in that** the central seat (15) has a seating surface (16) and a seatback (17) mounted articulated in relation to said seating surface (16) between a position of use and a folded back position wherein the seatback (17) is arranged against the seating surface (16), the seating surface (16) of said central seat (15) being furthermore mounted mobile in relation to the floor between a position of use and a lowered position wherein the central seat (15) is offset vertically downwards in relation to the plane of the seating surface (2) of the lateral seats (1, 1') when said seating surfaces (2) are in their position of use.

14. Motor vehicle according to claim 13, **characterised in that** the lateral seats (1, 1') are mobiles between a lateral forward position wherein the lateral seats (1, 1') are arranged on either side of the central seat (15) and central retracted position wherein, when the seatback (17) of the central seat (15) is in its folded back position and the seating surface (16) of the central seat (15) in its lowered position, at least one portion of the seating surface (2) of the lateral seats (1, 1') extends above the seating surface (16) of the central seat (15).

## Patentansprüche

1. Sitz (1) für Kraftfahrzeug, wobei der Sitz eine Sitzfläche (2) und eine Verschiebungsvorrichtung umfasst, auf der die Sitzfläche montiert ist; wobei die Verschiebungsvorrichtung Folgendes umfasst:
- ein Mittel zum Gleiten der Sitzfläche (2) entlang einer ersten Achse (x) und mindestens ein Mittel zum Gleiten der Sitzfläche (2) entlang einer zweiten Achse (y), die mit der ersten Achse (x) konvergiert, und
- einen Führungsmechanismus (8), der einen Verschiebungsweg der Sitzfläche definiert und ermöglicht, die Bewegung der Sitzfläche (2) in Translation gleichzeitig entlang der ersten (x) und zweiten Achse (y) zu führen,
**dadurch gekennzeichnet, dass** der Führungsmechanismus (8) eine Führungsschiene (9) und einen Finger (10) umfasst, der in der Führungsschiene (9) beweglich ist, wobei die Führungsschiene (9) fest auf dem Boden des Fahrzeugs montiert werden kann oder die Führungsschiene fest an der Sitzfläche (2) montiert werden kann, und der Finger fest auf der Sitzfläche (2) montiert werden kann oder der Finger fest auf dem Boden des Fahrzeugs montiert werden kann.

2. Sitz (1) für Kraftfahrzeug nach Anspruch 1, **dadurch gekennzeichnet, dass** die Führungsschiene (9) im Wesentlichen die Form eines Hakens aufweist, wovon sich ein erster Teil im Wesentlichen entlang der ersten Achse (x) erstreckt.

3. Sitz (1) für Kraftfahrzeug nach Anspruch 1 oder 2, **dadurch gekennzeichnet, dass** die Verschiebungsvorrichtung mindestens einen Schieber (4a, 4b) umfasst, der gleitend auf einer Kufe (5a, 5b) entlang der zweiten Achse (y) montiert ist, wobei die Kufe (5a, 5b) gleitend entlang der ersten Achse (x) auf einer Führungsscheine (6a, 6b) montiert ist, dazu ausgelegt, auf dem Boden des Fahrzeugs befestigt zu werden.

4. Sitz (1) für Kraftfahrzeug nach Anspruch 3, **dadurch gekennzeichnet, dass** die Verschiebungsvorrichtung (2) zwei parallele Schieber (4a, 4b) umfasst, die gleitend auf zwei parallelen Kufen (5a, 5b) montiert sind, wobei die Kufen (5a, 5b) jeweils gleitend auf einer Führungsschiene (6a, 6b) montiert sind, die sich entlang der ersten Achse (x) erstreckt.

5. Sitz (1) für Kraftfahrzeug nach Anspruch 4, **dadurch gekennzeichnet, dass** er eine Querstrebe (12) umfasst, die mit den parallelen Schiebern (4a, 4b) fest verbunden ist und den Finger (10) oder die Führungsschiene (9) trägt.

6. Sitz (1) für Kraftfahrzeug nach einem der Ansprüche 1 bis 5, **dadurch gekennzeichnet, dass** die erste Achse (x) und die zweite Achse (y) senkrecht sind.

7. Sitz (1) für Kraftfahrzeug nach Anspruch 1 bis 6, **dadurch gekennzeichnet, dass** er eine Gelenkvorrichtung der Sitzfläche (2) umfasst, die auf der Verschiebungsvorrichtung montiert ist und die Bewegung der Sitzfläche (2) zwischen einer Verwendungsposition und einer abgesenkten Position ermöglicht.

8. Sitz (1) für Kraftfahrzeug nach Anspruch 7, **dadurch gekennzeichnet, dass** die Gelenkvorrichtung der Sitzfläche aus vier parallelen Verbindungsstangen (13a, 13b, 13c, 13d) zusammengesetzt ist, die ein erstes Ende aufweisen, das drehend auf der Sitzfläche (2) um eine dritte Achse (A) montiert ist, und ein zweites Ende, das drehend auf der Verschiebungsvorrichtung entlang einer vierten Achse (B) montiert ist, die parallel zur dritten Achse (A) ist, wobei die Verbindungsstangen (13a, 13b, 13c, 13d) ein verformbares Parallelepiped bilden.

9. Sitz (1) für Kraftfahrzeug nach einem der Ansprüche 1 bis 8, **dadurch gekennzeichnet, dass** er eine Rückenlehne (3) umfasst, die auf der Sitzfläche (2) montiert ist.

10. Sitz (1) für Kraftfahrzeug nach Anspruch 9, **dadurch gekennzeichnet, dass** die Rückenlehne (3) auf der Sitzfläche (2) zwischen mindestens einer Verwendungsposition und einer Position, die gegen die Sitzfläche (2) heruntergeklappt ist, gelenkig montiert ist.

11. Kraftfahrzeug, **dadurch gekennzeichnet, dass** es mindestens einen Sitz (1) nach einem der Ansprüche 1 bis 10 umfasst, wobei die erste Achse (x) (beziehungsweise die zweite Achse (y)) eine Längsachse zum Fahrzug ist, und wobei die zweite Achse (y) (beziehungsweise die erste Achse (x)) eine Querachse zum Fahrzug ist.

12. Kraftfahrzeug nach Anspruch 11, **dadurch gekennzeichnet, dass** es eine hintere Sitzreihe (14) umfasst, zusammengesetzt aus zwei Seitensitzen (1, 1') nach einem der Ansprüche 1 bis 10, die auf beiden Seiten eines Mittelsitzes (15) angeordnet sind.

13. Kraftfahrzeug nach Anspruch 12, **dadurch gekennzeichnet, dass** der Mittelsitz (15) eine Sitzfläche (16) und eine Rückenlehne (17) aufweist, die mit Bezug auf die Sitzfläche (16) zwischen einer Verwendungsposition und einer heruntergeklappten Position gelenkig montiert ist, in der die Rückenlehne (17) gegen die Sitzfläche (16) angebracht ist, wobei die Sitzfläche (16) des Mittelsitzes (15) außerdem beweglich mit Bezug auf den Boden zwischen einer Verwendungsposition und einer abgesenkten Position montiert ist, in der der Mittelsitz (15) vertikal nach unten mit Bezug auf die Ebene der Sitzfläche (2) der Seitensitze (1, 1') versetzt ist, wenn sich die Sitze (2) in ihrer Verwendungsposition befinden.

14. Kraftfahrzeug nach Anspruch 13, **dadurch gekennzeichnet, dass** die Seitensitze (1, 1') zwischen einer seitlich vorgeschobenen Position, in der die Seitensitze (1, 1') auf beiden Seiten des Mittelsitzes (15) angeordnet sind, und einer zurückgezogenen mittleren Position beweglich sind, in der, wenn sich die Rückenlehne (17) des Mittelsitzes (15) in ihrer heruntergeklappten Position und die Sitzfläche (16) des Mittelsitzes (15) in ihrer abgesenkten Position befindet, sich mindestens ein Teil der Sitzfläche (2) der Seitensitze (1, 1') über die Sitzfläche (16) des Mittelsitzes (15) erstreckt.
